# EUROPÄISCHE PATENTSCHRIFT

(11) **EP 1 037 035 B1**
(45) Veröffentlichungstag und Bekanntmachung des Hinweises auf die Patenterteilung: **14.11.2001**
(21) Anmeldenummer: 00102909.9
(22) Anmeldetag: 12.02.2000
(51) Int. Cl.: G01N 21/05

(54) **Durchflussmesszelle zur Untersuchung einer schnell ablaufenden chemischen Reaktion**
Flow through cell for investigating a chemical reaction that takes place rapidly
Cellule à circulation de fluides pour l'analyse d'une reaction chimique qui se déroule rapidement

(30) Priorität: 05.03.1999 DE 19909692
(43) Veröffentlichungstag der Anmeldung: 20.09.2000
(73) Patentinhaber: Forschungszentrum Karlsruhe GmbH, 76133 Karlsruhe (DE)
(72) Erfinder: Füchsle, Kathrin, 76227 Karlsruhe (DE); Moss, David, 76377 Waldbronn (DE)

(56) Entgegenhaltungen:
- DE-U- 29 809 591
- US-A- 4 227 810

## Beschreibung

Die Erfindung betrifft eine Durchflußmeßzelle zur Untersuchung einer schnell ablaufenden Chemischen Reaktion gemäß dem ersten Patentanspruch.

Aus der DE 298 09 591 U ist eine Durchflußmeßvorrichtung mit IR-Küvette zur Untersuchung einer schnell ablaufenden Chemischen Reaktion bekannt. Diese Vorrichtung dient zur Identifizierung von pharmazeutischen Wirkstoffen, wobei untersucht wird, ob zwei Reaktanden miteinander eine Bindung eingehen. Mit der Vorrichtung kann beispielsweise festgestellt werden, ob ein Ligand mit einem vorgegebenen Protein einen Komplex bildet. Die Untersuchung erfolgt in der Weise, daß die Reaktanden miteinander gemischt werden und mit der Mischung zu zwei verschiedenen Zeiten ein IR-Spektrum aufgenommen wird. Das erste Spektrum wird vorzugsweise unmittelbar nach der Vermischung der Reaktanden aufgenommen und das zweite Spektrum nach einer angemessenen Wartezeit. Aus dem Differenzspektrum der beiden Spektren läßt sich erkennen, ob eine chemische Reaktion stattgefunden hat, denn nur in diesem Fall unterscheiden sich die beiden Spektren. Die wesentlichen Komponenten der Vorrichtung sind Drehventile und eine übliche IR-Küvette. Die Reaktanden werden mit Hilfe von Pumpen in einen abgeschlossenen Raum zwischen zwei Drehventilen gebracht, mit einer Hochdruckpumpe, die destilliertes Wasser fördert, gemischt und in die IR-Küvette gepumpt, worauf sofort das erste Spektrum aufgenommen wird. Das zweite Spektrum wird nach der Wartezeit aufgenommen.

Bei dieser Vorrichtung kann nur ein Spektrum der bereits miteinander gemischten Ausgangsverbindungen aufgenommen werden. Bei sehr schnell ablaufenden chemischen Reaktionen hat sich zu dem Zeitpunkt, an dem das erste Spektrum aufgenommen wird, bereits ein Teil der Ausgangsverbindungen umgesetzt.

US-A-4 227 810 beschreibt eine Meßzelle mit drei Meßräumen für zwei Reagenzien und eine zu analysierende Substanz. Jeder der Meßräume für die Reagenzien ist durch Leitungen mit dem Meßraum für die zu analysierende Substanz verbunden. Alle drei Meßräume sind mit einem optischen Strahl durchstrahlbar.

Der Erfindung liegt die Aufgabe zugrunde, eine Vorrichtung zur Untersuchung einer schnell ablaufenden chemischen Reaktion vorzuschlagen, mit der das Spektrum der Ausgangsverbindungen einer chemischen Reaktion aufgenommen werden kann, ohne daß die Ausgangsverbindungen zuvor gemischt werden.

Die Aufgabe wird durch die Durchflußmeßzelle gemäß dem ersten Patentanspruch gelöst. In den weiteren Ansprüchen sind bevorzugte Ausgestaltungen der Durchflußmeßzelle angegeben.

Die erfindungsgemäße Durchflußzelle besitzt jeweils einen Meßraum für jede der Ausgangsverbindungen der chemischen Reaktion und einen Meßraum für das Reaktionsprodukt. Da üblicherweise zwei Reaktanden miteinander zur Reaktion gebracht werden, sind in einer bevorzugten Ausführungsform zwei Meßräume für die Ausgangsprodukte vorhanden. Die Durchflußmeßzelle kann jedoch in einfacher Weise auch so ausgelegt werden, daß drei Reaktanden miteinander zur Reaktion gebracht werden.

Die Ausgangsverbindungen treten durch jeweils eine Zuleitung in den jeweiligen Meßraum ein und verlassen den Meßraum durch jeweils einen Ablauf. Die Abläufe münden in den Meßraum für das Reaktionsprodukt, der seinerseits ebenfalls mit einem Auslauf versehen ist. Die Ausgangsverbindungen lassen sich somit separat beispielsweise mit Hilfe einer Dosierpumpe in die jeweiligen Meßräume einspeisen, wonach sie sich in dem Meßraum für das Reaktionsprodukt vereinigen und miteinander reagieren. Das Reaktionsprodukt verläßt den Meßraum über den Ablauf.

Erfindungsgemäß sind die Meßräume für die Ausgangsprodukte so angeordnet, daß sie gemeinsam von einem einzigen optischen Strahl durchstrahlbar sind. Die Art des verwendeten optischen Strahls hängt von der Art des gewünschten Spektrums ab. Zur Erzeugung von IR-Spektren wird der Strahl einer kontinuierlichen IR-Strahlungsquelle verwendet. In gleicher Weise kann die Durchflußmeßzelle für die Erzeugung von UV-Spektren oder Spektren des sichtbaren Lichts (VIS-Spektren) eingesetzt werden, wenn die entsprechenden kontinuierlichen Strahlungsquellen verwendet werden. Die Meßräume für die Ausgangsverbindungen sind daher vorzugsweise so angeordnet, daß sie in Richtung des optischen Strahls gesehen miteinander fluchten. Form und Größe der Meßräume sind dabei frei wählbar; sie werden in Abhängigkeit vom Herstellungsverfahren, von der Art der gewünschten Spektren (IR, VIS, UV) und von der Menge der eingesetzten Ausgangsverbindungen gewählt. Zur Erzeugung von IR-Spektren in Wasser als Lösungsmittel eignen sich Meßräume für die Ausgangsprodukte mit optischen Weglängen von 2 µm bis 10 µm; wird als Lösungsmittel schweres Wasser (D₂O) eingesetzt, sollten die optischen Weglängen 2 µm bis 25 µm betragen.

Vorzugsweise sind die Meßräume für die Ausgangsverbindungen gleich geformt und von gleicher Größe, insbesondere von gleicher optischer Dicke. Im Interesse einer optimalen Reproduzierbarkeit wird die optische Dicke eines jeden Meßraumes sehr exakt, etwa auf < 1 %, konstant gehalten. Beträgt die optische Weglänge eines jeden Meßraums für die Ausgangsverbindungen beispielsweise 10 um, soll sie daher in den einzelnen Meßräumen um weniger als 0,1 µm differieren.

Der Meßraum für das Reaktionsprodukt ist so angeordnet, daß er von einem zweiten optischen Strahl durchstrahlbar ist. Der zweite optische Strahl soll dabei ausschließlich den Meßraum für das Reaktionsprodukt und der erste optische Stahl ausschließlich die Meßräume für die Ausgangsverbindungen durchstrahlen. Die Dicke des Meßraums für das Reaktionsprodukt in der Richtung des zweiten Strahls wird vorzugsweise so gewählt, daß sie der Summe der Dicken der Meßräume für die Ausgangsverbindungen in der Richtung des ersten Strahls entspricht.

An sich wäre es technisch möglich, die Meßräume für die Ausgangsverbindungen so anzuordnen, daß sie jeweils einzeln von entsprechend vielen optischen Strahlen durchstrahlbar wären. Eine solche Anordnung würde jedoch einen vermeidbaren zusätzlichen konstruktiven Aufwand hinsichtlich der Anordnung der Strahlungsquelle bedingen, ohne daß ein Vorteil damit verbunden wäre. Zudem wäre die Bildung von Differenzspektren bei einer solchen Meßzelle wesentlich aufwendiger.

Die Durchflußmeßzelle läßt sich am einfachsten durch Aufeinanderstapeln verschiedener bearbeiteter Lagen eines optisch transparenten Materials herstellen. Für den Einsatz der Durchflußmeßzelle zur Erzeugung von IR-Spektren können als optisch transparentes Material Siliciumwafer oder CaF₂-Plättchen verwendet werden. Siliciumwafer weisen im Bereich von 7000 bis 1000 cm⁻¹ eine ausreichende Transparenz für IR-Strahlung auf; Calciumfluorid ist ebenfalls für IR-Strahlung, aber auch für UV-Strahlung und für Strahlung im sichtbaren Bereich durchlässig. Für den Einsatz der Durchflußmeßzelle im UV-Bereich läßt sich außerdem Quarzglas verwenden. Alle genannten Materialien sind darüber hinaus gegen viele chemische Verbindungen ausreichend resistent. In die Lagen können zur Herstellung einer ersten Ausführungsform etwa durch Fräsen oder durch die üblichen Methoden der Mikrostrukturfertigung, wie z. B. Ätzen, Vertiefungen eingebracht werden, die der gewünschten Form der Meßräume entsprechen. Durch das Aufeinanderstapeln der einzelnen bearbeiteten Lagen werden die Meßräume hergestellt, wobei sich die Zu- und Ableitungen durch Bohrungen erzeugen lassen. Alternativ können zwischen den Lagen Zwischenschichten, die mit Durchbrüchen in der für die Meßräume gewünschten Form versehen sind, angeordnet werden, wobei die Zwischenschichten nicht optisch transparent zu sein brauchen. Die Zu- und Ableitungen lassen sich wiederum durch Bohrungen in den Lagen herstellen.

Die Erfindung wird im folgenden anhand einer Figur näher erläutert.

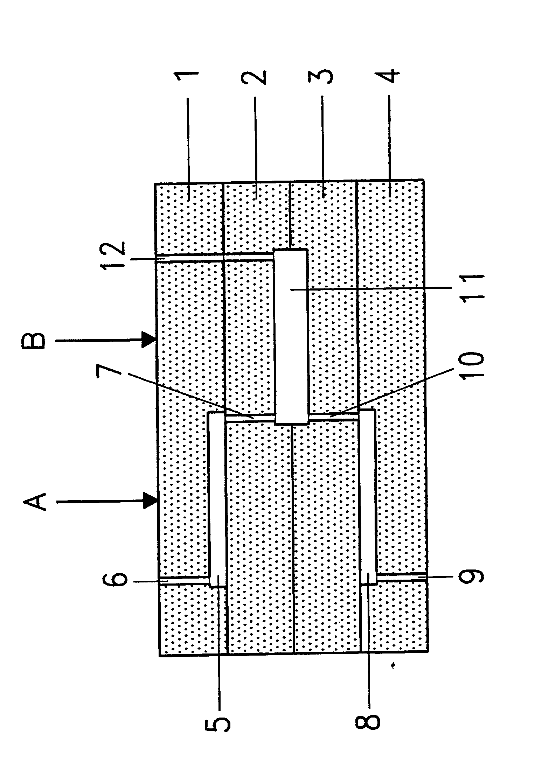

Die Figur zeigt eine bevorzugte Ausführungsform der Erfindung.

Die in der Figur dargestellte Ausführungsform besteht aus vier übereinander gestapelten, bearbeiteten Siliciumwafern 1, 2, 3, 4, die etwa 500 µm dick sind. In den obersten Siliciumwafer ist eine Vertiefung 5 mit einer Größe von 4 mm x 12 mm und einer Tiefe von 5 um eingeätzt, die zusammen mit dem benachbarten Siliciumwafer 2 einen Meßraum für die erste Ausgangsverbindung bildet. Am Rand der Vertiefung weist der Siliciumwafer eine Durchbohrung 6 mit einem Durchmesser von 200 µm auf, die die Zuleitung für den Meßraum darstellt. Am gegenüberliegenden Rand der Vertiefung 5 im obersten Siliciumwafer 1 ist durch den benachbarten Siliciumwafer 2 eine weitere Bohrung 7 angebracht. In analoger Weise wird der unterste Siliciumwafer 4 mit einer Vertiefung 8 und einer Bohrung 9 versehen. Der benachbarte Siliciumwafer 3 enthält wiederum eine Bohrung 10. Die Bohrungen 7, 10 in den Siliciumwafern 3 und 2 münden in einen Meßraum 11 für die Reaktionsprodukte, der durch Einätzen von Vertiefungen in die Siliciumwafer 2 und 3 hergestellt ist. Die optische Weglänge dieses Meßraums entspricht der Summe der Tiefen der beiden Vertiefungen 5 und 8 in den Siliciumwafern 1 und 4. An der den Bohrungen 7, 10 gegenüberliegenden Seite des Meßraums 11 ist eine Ablaufbohrung 12 angebracht, die sich durch die Siliciumwafer 1 und 2 erstreckt.

Die Vertiefungen 5, 8, die die Meßräume für die Ausgangsverbindungen bilden, sind so angeordnet, daß sie sich von einem IR-Strahl A gemeinsam durchstrahlen lassen. Der Meßraum 11, der die Reaktionsprodukte aufnimmt, wird von einem zweiten IR-Strahl B durchstrahlt.

Die erfindungsgemäße Durchflußmeßzelle eignet sich in besonderer Weise zur Untersuchung schnell ablaufender Reaktionen. Sie kann beispielsweise zur Verfolgung der Reaktion von Avidin mit Biotin eingesetzt werden, die in weniger als 1 ms vollständig abläuft. In diesem Fall werden bei der in der Figur dargestellten Ausführungsform gleichzeitig eine Biotin-Lösung durch die Bohrung 6 und eine Avidin-Lösung in die Bohrung 9 der Durchflußmeßzelle eingespeist. Die beiden Lösungen gelangen in die durch die Vertiefungen 5, 8 gebildeten Meßräume, wo sie gemeinsam von dem IR-Strahl A durchstrahlt werden, so daß ein erstes IR-Spektrum aufgenommen werden kann. Danach werden die beiden Lösungen in dem Meßraum 11 vereinigt, wobei Biotin und Avidin miteinander reagieren. Der Meßraum 11 wird von dem IR-Strahl B durchstrahlt, so daß sich ein IR-Spektrum des Reaktionsprodukts erzeugen läßt. Sofern nicht zwei IR-Strahlenquellen A und B eingesetzt werden, kann auch eine einzige Strahlenquelle von der Stelle A an die Stelle B verschoben werden.

## Patentansprüche

1. Durchflußmeßzelle zur Untersuchung einer schnell ablaufenden chemischen Reaktion mehrerer Ausgangsverbindungen mit
- jeweils einem Meßraum (5,8) für jede Ausgangsverbindung der Reaktion, der mit einer Zu- (6,9) und einer Ableitung (7,10) für die Ausgangsverbindung versehen ist, wobei
- die Meßräume für die Ausgangsverbindungen so angeordnet sind, daß sie gemeinsam mit einem einzigen, ersten optischen Strahl (A) durchstrahlbar sind, und
- einem mit einem zweiten optischen Strahl (B) durchstrahlbaren Meßraum (11) für das Reaktionsprodukt, in den die Ableitungen der Meßräume für die Ausgangsverbindungen münden und der mit einem Ablauf (12) versehen ist.

2. Durchflußmeßzelle nach Anspruch 1 bestehend aus mehreren Lagen (1,2,3,4) eines für den optischen Strahl transparenten Materials, wobei die Meßräume (5,8,11) aus jeweils einer Lage herausgearbeitet und die Lagen (1,2,3,4) in der Weise übereinander gestapelt sind, daß die Meßräume (5,8) für die Ausgangsverbindungen in Richtung des ersten optischen Strahls (A) miteinander fluchten.

3. Durchflußmeßzelle nach Anspruch 1 mit mehreren übereinander gestapelten Lagen eines für den optischen Strahl transparenten Materials und dazwischen angeordneten Zwischenlagen, wobei die Meßräume (5,8,11) von Durchbrüchen in den Zwischenlagen gebildet werden und die Zwischenlagen in der Weise angeordnet sind, daß die Meßräume (5,8) für die Ausgangsverbindungen in Richtung des ersten optischen Strahls (A) miteinander fluchten.

4. Durchflußmeßzelle nach Anspruch 1, 2 oder 3, bei der die Summe der Dicken der Meßräume (5,8) für die Ausgangsverbindungen in Richtung des ersten optischen Strahls (A) der Dicke des Meßraum (11) für das Reaktionsprodukt in Richtung des zweiten optischen Strahls (B) entspricht.

5. Durchflußmeßzelle nach Anspruch 2 oder 3 mit Silicium oder Calciumfluorid als optisch transparentem Material.

## Claims

1. Throughflow measuring cell for monitoring a rapidly occurring chemical reaction between a plurality of starting compounds, said cell having
- a respective measuring chamber (5, 8) for each starting compound of the reaction, which chamber is provided with a supply means (6, 9) and a discharge means (7) for the starting compound, wherein
- the measuring chambers for the starting compounds are so disposed that a single, first optical beam (A) can shine therethrough jointly, and
- said cell having a measuring chamber (11) for the reaction product, through which chamber a second optical beam (B) can shine, the discharge means of the measuring chambers for the starting compounds terminating in said measuring chamber, which is provided with an outlet (12).

2. Throughflow measuring cell according to claim 1, comprising a plurality of layers (1, 2, 3, 4) formed from a material which is transparent for the optical beam, wherein the measuring chambers (5, 8, 11) are each produced from one respective layer, and the layers (1, 2, 3, 4) are stacked one above the other in such a manner that the measuring chambers (5, 8) for the starting compounds are in alignment with one another when viewed with respect to the direction of the first optical beam (A).

3. Throughflow measuring cell according to claim 1, having a plurality of layers which are stacked one above the other and formed from a material which is transparent for the optical beam, and having intermediate layers disposed therebetween, wherein the measuring chambers (5, 8, 11) are formed by openings in the intermediate layers, and the intermediate layers are disposed in such a manner that the measuring chambers (5,8) for the starting compounds are in alignment with one another when viewed with respect to the direction of the first optical beam (A).

4. Throughflow measuring cell according to claim 1, 2 or 3, wherein the sum of the thicknesses of the measuring chambers (5, 8) for the starting compounds, when viewed with respect to the direction of the first optical beam (A), corresponds to the thickness of the measuring chamber (11) for the reaction product when viewed with respect to the direction of the second optical beam (B).

5. Throughflow measuring cell according to claim 2 or 3 with silicon or calcium fluoride serving as the optically transparent material.

## Revendications

1. Cellules de mesure à circulation pour l'analyse de réactions chimiques qui se déroulent rapidement, de plusieurs produits de départ avec,
- respectivement un espace de mesure (5, 8) pour chaque composé de départ de la réaction, qui est équipé d'une amenée (6, 9) et d'une évacuation (7) pour le composé de départ,
- les espaces de mesure pour les composés de départ étant disposés de telle sorte qu'ils sont irradiables conjointement avec un premier rayonnement optique unique (A), et
- avec un espace de mesure (11) irradiable par un deuxième rayonnement optique (B) pour le produit de la réaction, et dans lequel les évacuations des espaces de mesure pour les composés de départ débouchent et qui est pourvu d'une évacuation (12).

2. Cellule de mesure à circulation selon la revendication 1, qui consiste en plusieurs couches (1, 2, 3, 4) d'un matériau transparent pour le rayonnement optique, les espaces de mesure (5, 8, 11) étant dégagés à chaque fois d'une couche et les couches (1, 2, 3, 4) étant empilées les unes au-dessus des autres de manière que les espaces de mesure (5, 8) pour les composés de départ soient alignés l'un avec l'autre dans la direction du premier rayonnement optique.

3. Cellule de mesure à circulation selon la revendication 1, avec plusieurs couches empilées les unes au-dessus des autres, d'un matériau transparent pour un rayonnement optique, et des couches intermédiaires disposées entre celles-ci, dans laquelle les espaces de mesure (5, 8, 11) sont formés de percements dans les couches intermédiaires et les couches intermédiaires sont disposées de manière que les espaces de mesure (5, 8) pour les composés de départ soient alignés l'un avec l'autre dans la direction du premier rayonnement optique (A).

4. Cellule de mesure à circulation selon l'une quelconque des revendications 1, 2 ou 3, dans laquelle la somme des épaisseurs des espaces de mesure (5, 8) pour les composés de départ dans la direction du premier rayonnement optique (A), correspond à l'épaisseur de l'espace de mesure (11) pour le produit de réaction dans la direction du deuxième rayonnement optique (B).

5. Cellule de mesure à circulation selon l'une quelconque des revendications 2 ou 3, avec du silicium ou du fluorure de calcium comme matériau optiquement transparent.
